# FASCICULE DE BREVET EUROPEEN

(11) **EP 1 208 963 B1**
(45) Date de publication et mention de la délivrance du brevet: **25.10.2006**
(21) Numéro de dépôt: 01126933.9
(22) Date de dépôt: 13.11.2001
(51) Int. Cl.: B29D 30/30, B29D 30/70, B29C 70/38, B21C 47/26, B21F 1/04, B29D 30/38

(54) **Appareil d'application d'un câblé sur une surface rotative et procédé d'utilisation de cet appareil**
Vorrichtung zum Aufbringen eines Kordes auf eine rotierende Oberfläche und Verfahren zur Verwendung dieser Vorrichtung
Apparatus for applying a cord on a rotating surface and method of using this apparatus

(30) Priorité: 28.11.2000 FR 0015461
(43) Date de publication de la demande: 29.05.2002
(73) Titulaire: Société de Technologie Michelin, 63000 Clermont-Ferrand Cedex 09 (FR); MICHELIN Recherche et Technique S.A., 1763 Granges-Paccot (CH)
(72) Inventeur: Meyer, Daniel, 63400 Chamalieres (FR)
(74) Mandataire: Cohen, Sylvia

(56) Documents cités:
- US-A- 4 874 455
- US-A- 5 863 368

## Description

L'invention concerne un appareil d'application d'un câblé sur une surface de réception rotative, notamment pour fabriquer des pneumatiques.

L'intérêt de réaliser un renforcement annulaire dans les pneumatiques, utilisable sur toute leur périphérie tel qu'un renforcement de la carcasse, a été démontré depuis longtemps. Un tel renforcement peut, en particulier, être constitué par la réalisation d'une nappe comprenant des câblés enroulés radialement sur la carcasse du pneumatique; cette nappe est couramment appelée dans le pneumatique cuit : « nappe à zéro degré ».

On entend ici par câblé un seul fil textile ou métallique ou plusieurs, le ou les fils pouvant être, de plus, enrobés d'un mélange caoutchouteux cru ou cuit.

On utilise en particulier des fils métalliques pour la réalisation de nappe à zéro degré dans certains pneumatiques tels que ceux destinés aux poids lourds. Or, lors de la cuisson des pneumatiques crus, ces derniers subissent dans le moule de cuisson une conformation dont il est nécessaire de tenir compte pour l'architecture finale des pneumatiques. Il est clair que l'utilisation de câblés métalliques pour des nappes à zéro degré engendre de grandes difficultés, ces câblés ne pouvant pas accepter d'allongement lors de la conformation dans le moule, du fait de leur rigidité.

Diverses solutions ont été envisagées pour résoudre ce problème. Une solution a consisté à utiliser des câblés métalliques fractionnés. Les nappes à zéro degré crues ainsi réalisées sont susceptibles d'accepter la conformation à laquelle le pneumatique est soumis lors de la cuisson. Cependant, de telles nappes constituent dans le pneumatique cuit des zones fragilisées vis-à-vis de leur sensibilité à l'oxydation due à ces coupures entre les différentes parties des câblés. Cette solution reste donc insatisfaisante.

D'autres solutions ont été proposées portant sur la nature des câblés métalliques. Ainsi, par exemple, l'utilisation de fils métalliques bi-élastiques permet de réaliser un compromis entre les propriétés de rigidité et d'allongement de la nappe crue obtenue. Bien qu'intéressante, une telle solution entraîne des modifications importantes dans les architectures crues et cuites de pneumatique souhaitées pour compenser la baisse de rigidité de la nappe à zéro degré cuite obtenue, telles que la présence de nappe supplémentaire, des modifications dans les mélanges caoutchouteux, etc.

Enfin, un troisième type de solutions s'est intéressé à des modifications de pose de produits à cru permettant d'obtenir les architectures à cuit souhaitées. Ainsi, est apparue l'idée de poser les câblés sous forme ondulée dans le pneumatique cru afin qu'ils soient disposés radialement dans le pneumatique cuit suite à la conformation en moule de cuisson.

Cette solution astucieuse présente néanmoins des difficultés de mise en oeuvre.

En effet, le pneumatique cru a été assemblé sur un tambour cylindrique ou légèrement galbé alors que le pneumatique cuit sortant du moule de cuisson est, par rapport à cette première forme, surgalbé. Par conséquent, lors de la conformation, les déformations subies par le pneumatique vont être beaucoup plus importantes au sommet dudit pneumatique qu'au niveau de ses épaules. Il est donc nécessaire d'être capable de poser industriellement un câblé sinusoïdalement avec des ondulations différentes, voire même des périodes différentes, selon sa position radiale afin que la nappe réalisée présente des fils orientés radialement quelle que soit sa position radiale proche du sommet ou des épaules.

La publication EP-0 724 949 présente un appareil d'application de fils textiles ou métalliques sur une surface rotative avec des ondulations sinusoïdales. Des moyens de déplacements des fils en translation transversale par rapport à la direction de délivrance des fils permettent d'obtenir une telle pose, l'amplitude et la période de la sinusoïde étant maîtrisée grâce au contrôle et à la commande des vitesses de rotation de la surface de pose, de l'élément délivrant les fils et de la commande des moyens de déplacement. Cependant, ces moyens de déplacements sont constitués par une filière translatable dans la direction transversale, actionnée par un moteur par l'intermédiaire d'une bielle fixée sur un volant motorisé.

Cela signifie en pratique que, la vitesse de rotation de la surface de pose étant déterminée, pour modifier l'amplitude des ondulations des fils sur cette surface en continu, il faut modifier la vitesse de l'élément délivrant les fils pour modifier la quantité de fils délivrés et modifier la position de la bielle par rapport au volant pour synchroniser la modification de l'amplitude des ondulations réalisées. La réalisation de cette dernière modification en continu paraît donc difficilement envisageable. De plus, il est clair, qu'en fonction de la sinusoïde désirée, la vitesse de pose elle aussi sera limitée afin de ne pas gêner le mouvement motorisé de la filière.

L'invention vise à pallier l'ensemble de ces inconvénients.

Selon l'invention, comme formulée dans la revendication 1, l'appareil d'application d'au moins un câblé sur une surface de réception rotative ayant une vitesse V2, comprenant des moyens de délivrance du câblé, comprenant au moins un cabestan ayant une vitesse de délivrance du câblé V1, des moyens de déplacement transversal alternatif du câblé par rapport à la surface de réception et des moyens de pose du câblé sur ladite surface de réception, caractérisé en ce que les moyens de déplacement transversal alternatif du câblé comprennent deux premiers arbres rotatifs motorisés, portés par un corps, les axes desdits premiers arbres étant perpendiculaires à la direction de progression du câblé, et une tête de guidage comportant une bielle reliée aux extrémités desdits premiers arbres rotatifs par des biellettes, lesdites biellettes étant elles mêmes montées sur la bielle par l'intermédiaire de deuxièmes arbres d'axes parallèles aux premiers arbres, les deuxièmes arbres étant montés en rotation sur la bielle, les biellettes pouvant pivoter autour de leurs axes respectifs par rapport auxdits premiers et deuxièmes arbres, et en ce que l'entraînement en rotation des premiers et deuxièmes arbres autorise un déplacement transversal alternatif de la bielle, l'amplitude du déplacement transversal étant proportionnelle à l'importance du pivotement des biellettes autour de leurs axes respectifs.

L'amplitude du pivotement des biellettes est déterminée directement par le rapport des vitesses V1 et V2. Ce rapport est modifiable de façon continue pendant la pose du câblé, et cet asservissement permet une modification en continu de l'amplitude de la sinusoïde formée par le câblé sur la surface de pose mais permet surtout d'atteindre des vitesses de pose du câblé très importantes.

L'invention concerne également un procédé d'application d'au moins un câblé sur une surface de réception rotative comme formulé dans la revendication 8, ledit procédé comprenant les étapes suivantes :
- on délivre un câblé dans une direction sensiblement perpendiculaire à l'axe de rotation de la surface de réception,
- on déplace transversalement à ladite surface le câblé afin de créer des ondulations sur cette dernière et
- on pose le câblé sur cette surface de réception,
caractérisé en ce que le déplacement transversal alternatif du câblé est obtenu par un mouvement de rotation autour d'un axe perpendiculaire à la direction de progression du câblé dont l'amplitude est directement déterminée par la quantité de câblé délivrée par tour de la surface de réception. Des formes avantageuses de l'invention font l'objet des revendications dépendantes.

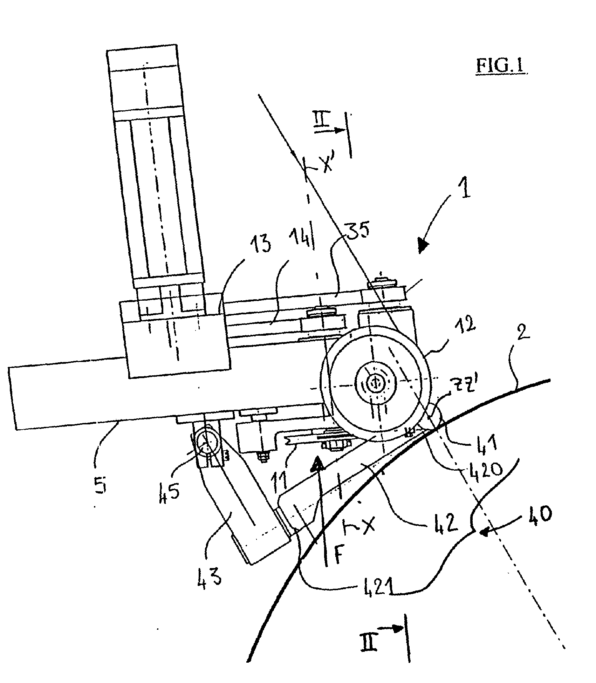

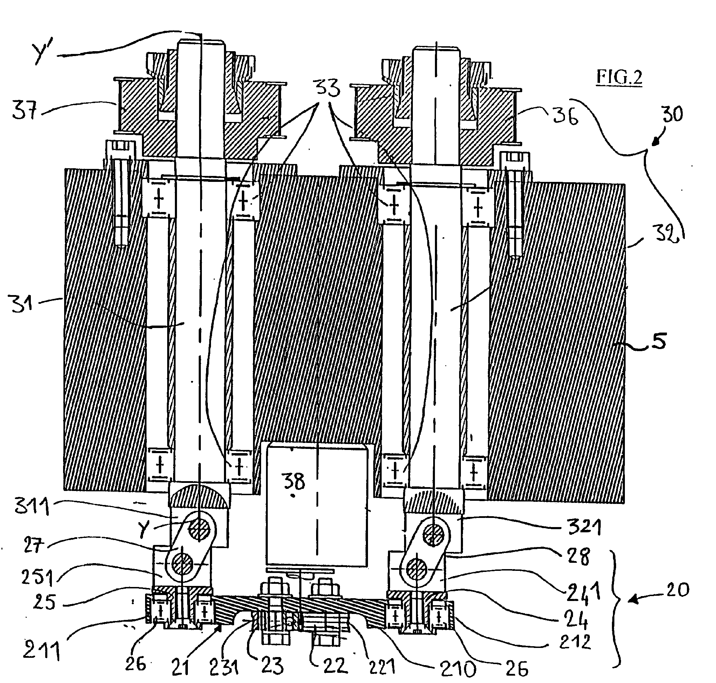

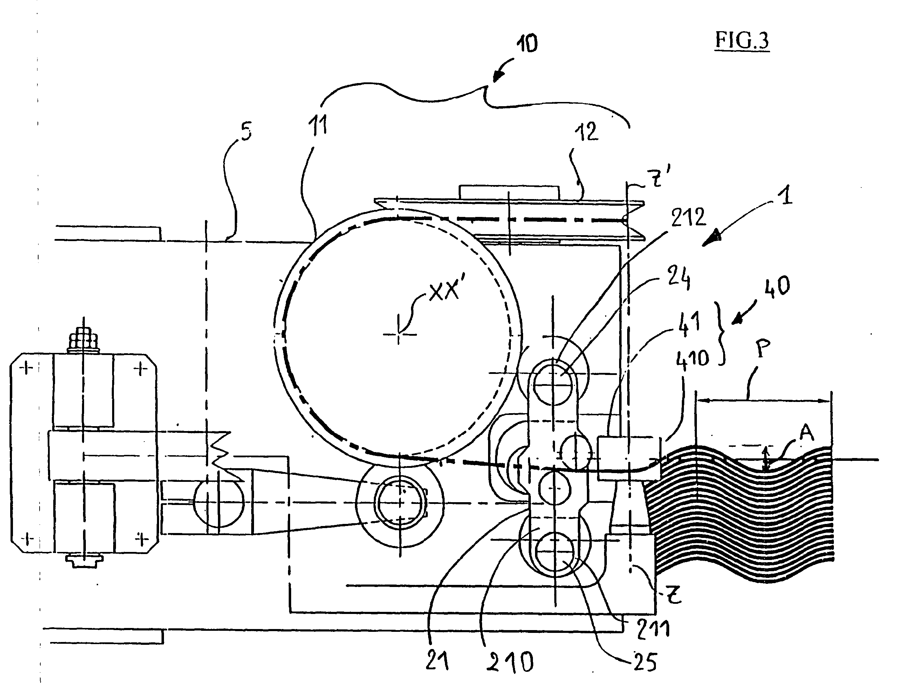

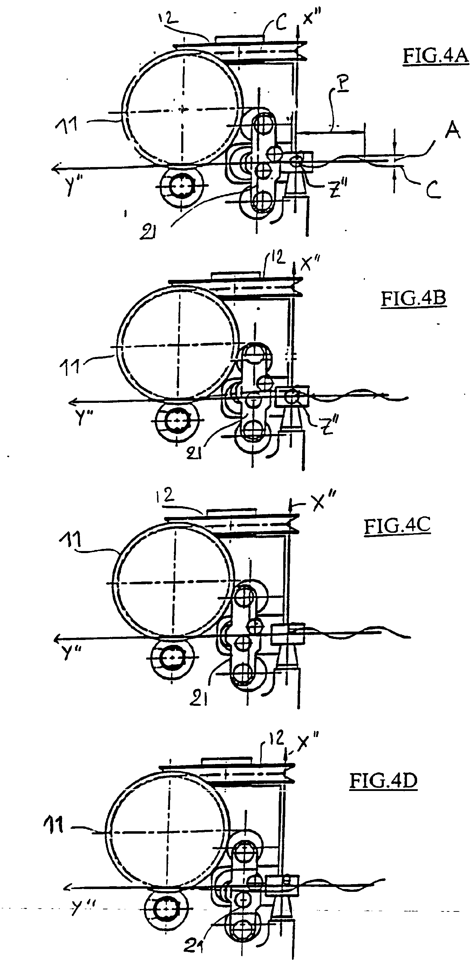

D'autres caractéristiques et avantages de l'invention apparaîtront à la lecture de la description d'un exemple de réalisation d'un appareil d'application d'un câblé conforme à l'invention, en référence au dessin dans lequel :
- la figure 1 est une représentation schématique en élévation latérale de l'appareil d'application conforme à l'invention,
- la figure 2 est une coupe partielle de l'appareil d'application selon la ligne II représentée sur la figure 1,
- la figure 3 est une représentation partielle en vue de dessous de l'appareil d'application selon la flèche F représentée à la figure 1,
- les figures 4A à 4D sont des représentations schématiques de l'appareil d'application représenté à la figure 3, illustrant ses différentes phases de fonctionnement.
   Selon la figure 1, l'appareil d'application 1 d'un câblé sur une surface de réception rotative 2 comprend un corps 5, le câblé étant appliqué sur la surface de réception 2 dans une direction sensiblement perpendiculaire à l'axe de rotation de ladite surface tangentiellement à cette dernière. La surface de réception 2 tourne avec une vitesse de rotation contrôlée qu'on désignera par V2.
   Dans ce qui suit, on désignera par « direction de progression du câblé » la direction sensiblement perpendiculaire à l'axe de rotation de la surface de réception 2.
   Le corps 5 porte des moyens de délivrance 10 du câblé dans une direction perpendiculaire à l'axe de rotation de la surface de réception, des moyens de déplacement transversal 20, 30 dudit câblé et enfin des moyens de pose 40 de ce câblé sur la surface de réception 2, ces différents organes agissant successivement pour réaliser l'application du câblé sur la surface de réception 2 avec les ondulations souhaitées.
   Les moyens 10 de délivrance comprennent au moins une poulie 12 d'arrivée du câblé alimenté par un rouleau d'approvisionnement non représenté. L'axe de rotation de la poulie 12 est ici parallèle à celui de la surface de réception 2, ce qui permet au rouleau d'approvisionner aisément un cabestan 11 dont l'axe XX' est perpendiculaire à celui du rouleau 12. Ainsi en sortie du cabestan 11, le câblé sort sensiblement dans la direction de progression du câblé pour alimenter les moyens de déplacement transversal 20, 30 dudit câblé.
   Le cabestan 11 est motorisé à l'aide d'un moteur 13, par l'intermédiaire d'une courroie de transmission 14 avec une vitesse de rotation que l'on notera V1. La maîtrise de la vitesse V1 en synchronisme avec la vitesse V2 de rotation de la surface de réception 2, permet de déterminer la quantité de câblé délivré sur la surface rotative 2 par tour de celle-ci.
   Les moyens de déplacement 20, 30 sont représentés plus particulièrement sur les figures 2 et 3, et comprennent une tête de guidage 20 coopérant avec les moyens 30 portés dans le corps 5.
   La tête de guidage 20 comprend une bielle 21, perpendiculaire à l'axe XX' de rotation du cabestan 11, qui porte sur sa face 210 orientée vers l'extérieur de l'appareil d'application 1, deux galets de guidage 22 et 23 d'axes perpendiculaires à ladite bielle et montés libres en rotation par rapport à cette dernière.
   Chaque galet de guidage 22, 23 porte une gorge centrale 221, 231 de réception du câblé délivré par le cabestan 11. Afin de faciliter le guidage du câblé et de l'accompagner dans son déplacement transversal, les deux galets de guidage 22 et 23 sont excentrés par rapport au centre de la face de la bielle 21 de sorte qu'ils soient tangents à la droite ayant la direction de progression du câblé et passant par le centre de la bielle, et décalés l'un de l'autre dans cette même direction. Bien que cette disposition soit avantageuse, on peut tout à fait envisager de disposer les deux galets sans décalage entre eux.
   Des arbres 24 et 25 d'axes parallèles entre eux sont montés à rotation dans les extrémités 211 et 212 de la bielle 21 par l'intermédiaire de roulement à billes 26, les axes des arbres 24 et 25 étant perpendiculaires à ladite bielle 21.
   Ces arbres 24 et 25 portent en sortie de la bielle 21 située vers la face intérieure de la bielle par rapport à l'appareil d'application respectivement une chape 241, 251.
   Les moyens de déplacement 30 comprennent deux arbres 31 et 32 parallèles entre eux et perpendiculaires à l'axe XX', c'est-à-dire perpendiculaire à la direction de progression du câblé tournant dans des roulements à billes 33 portés par le corps 5 et motorisé à l'aide d'un moteur commun non représenté relié respectivement à une poulie d'entraînement 36, 37 pour chaque arbre par une même courroie de transmission 35.
   Les arbres 31 et 32 se prolongent en sortie du corps 5 disposés vers la tête de guidage 20 par respectivement une chape 311, 321, ces chapes étant reliées respectivement aux chapes 221 et 231 par des biellettes 27 et 28 parallèles entre elles, assurant la transmission de la motorisation aux arbres 24 et 25.
   On désignera par V3 la vitesse de rotation des arbres 31, 32, 24 et 25.
   La rotation des arbres 31 et 32 permet avec le passage du câblé de réaliser l'alternance de positionnement des biellettes 27 et 28. En effet, le pivotement des bielles 27 et 28 autour de leur axe fixé sur les chapes 311 et 321 permet le décentrage de la bielle 21 par rapport aux arbres 31 et 32. Ainsi le centre de la bielle 21 décrit au cours de cette rotation, en projection sur un plan parallèle à la bielle, une ellipse.
   Par ailleurs, le corps 5 porte sur sa face parallèle à la bielle 21, un électro-aimant 38 qui exerce une force de rappel sur la biellette 21 visant à compenser la force de gravité.
   Les moyens de pose 40 du câblé sur la surface de réception 2 comprennent un galet de pose 41 tournant librement autour de son axe de rotation Y, dont la surface de révolution extérieure 410 est située contre la surface de réception 2 de sorte que le câblé passe entre ladite surface de révolution et la surface de réception. Ce galet de pose 41 est situé à proximité des deux galets de guidage 22 et 23 de sorte à accueillir le câblé provenant de ces galets.
   Un bras 42 porte le galet de pose 41 à l'une de ses extrémités 420, l'autre extrémité 421 du bras étant fixé par l'intermédiaire d'un support 43 au corps 5, ledit support étant monté pivotant sur une articulation élastique 45 sur le corps 5 pour garantir la force d'applique du câblé sur la surface rotative 2.
   Dans ce qui suit, on décrira succinctement le fonctionnement de l'appareil d'application pour la réalisation d'une période d'une sinusoïde de câblé, en référence aux figures 3 et 4A à 4D.
   Notons en préambule de cette description que la vitesse V2 de rotation de la surface de réception 2 étant déterminée, le réglage de la vitesse V1 de délivrance du câblé permet de fixer la quantité de câblé délivré par tour de la surface 2. Par ailleurs, en l'absence de câblé, les arbres 31 et 32 étant en rotation, l'électro-aimant 38 maintient la bielle 21 avec une position fixe des biellettes 27 et 28 par rapport aux chapes 311 et 321, et le centre de la bielle décria alors en projection sur un plan parallèle à la bielle; un cercle.
   En présence de câblé et pour une vitesse V1=V2, le câblé est posé de façon rectiligne. Lorsque la vitesse V1 de délivrance du câblé est supérieure à la vitesse de rotation V2 de la surface rotative, le câblé agit sur la bielle en exerçant une poussée qui va permettre un pivotement des biellettes 27 et 28, la rotation des arbres 31 et 32 amène l'alternance de position des biellettes puis on enchaîne avec la poussée du câblé. Ainsi pour V1 supérieure à V2, la vitesse V3 de rotation des arbres 31 et 32 permet de déterminer l'alternance des biellettes 27 et 28 par tour de la surface 2 et donc la période des ondulations réalisées par le câblé sur ladite surface. L'amplitude de ces ondulations est directement obtenue par la quantité de câblé délivré par tour de la surface 2 puisque c'est cette quantité qui «poussant» la bielle 21 détermine l'angle d'inclinaison des biellettes 27 et 28.
   Ainsi pour modifier aisément l'amplitude des ondulations du câblé sur la surface de réception 2 afin comme on l'a vue au début du texte d'avoir des amplitudes différentes en continu selon la position radiale du câblé, il suffit de modifier la quantité de câblé délivré par tour de la surface 2 et donc la vitesse V1. L'amplitude des ondulations s'ajuste d'elle-même comme on l'a vu précédemment. Le système est donc très simple à adapter aux modifications des ondulations souhaitées.
   Il est important de tenir compte de la nature du câblé. En effet, comme on l'a dit précédemment, ce câblé va agir comme un élément pousseur de la bielle 21 donc ce câblé doit avoir une certaine raideur lui permettant de jouer ce rôle. Cette raideur est facile à obtenir selon le choix d'un câblé métallique. Dans le cas d'un câblé textile, il devient nécessaire d'augmenter la force de l'électro-aimant pour que ce dernier joue un rôle plus important et que ce soit lui, et non plus le câblé, qui provoque un changement de sens de la bielle 21 dans la direction transversale.
   Les figures 4A à 4D illustrent donc les déplacements de bielle 21 pour la réalisation d'une période P d'ondulations d'un câblé C avec une amplitude A.
   On notera X", Y" et Z" les axes trigonométriques ayant comme origine le centre du galet de pose 41, Z" étant parallèle à l'axe de rotation du cabestan 11 et en tenant compte du sens trigonométrique.
   Sur la figure 4A, les biellettes 27 et 28 ont une position angulaire égale à zéro, ce qui signifie que les arbres 32 et 31 sont respectivement alignés avec les arbres 24 et 25, la position du câblé au centre du galet de pose 41 correspond à la côte X"=0. C'est le début de la période.
   Sur la figure 4B, les arbres 31 et 32 ont tourné de 90°, les biellettes 27 et 28 sont donc dans une des deux positions extrêmes que peut avoir la bielle 21, la position du câblé correspond à X"=A/2.
   Sur la figure 4C, le câblé est de nouveau dans une position X"=0, les arbres 31 et 32 ayant tourné de 180°, les biellettes 27 et 28 sont revenues dans leur position d'alignement entre les arbres 31, 32 et 25, 24.
   Enfin sur la figure 4D, les arbres 31 et 32 ont tourné de 270° et les biellettes 27 et 28 sont dans la deuxième position «extrême» de la bielle 21, c'est-à-dire à l'opposée par rapport à l'axe Y'Y de leur position représentée sur la figure 4B.
   Au vu des ces figures, le contrôle la création des ondulations du câblé sur la surface 2 par les mouvements de la bielle 21 apparaît clairement.

## Revendications

1. Appareil d'application (1) d'au moins un câblé sur une surface de réception rotative (2) ayant une vitesse V2, comprenant des moyens de délivrance du câblé (10) comprenant au moins un cabestan (11) ayant une vitesse de délivrance du câblé V1, des moyens de déplacement transversal alternatif (20, 30) du câblé par rapport à la surface de réception (2) et des moyens de pose (40) du câblé sur ladite surface de réception, **caractérisé en ce que** les moyens de déplacement transversal alternatif (20, 30) du câblé comprennent deux premiers arbres rotatifs motorisés (31, 32), portés par un corps (5), les axes desdits premiers arbres étant perpendiculaires à la direction de progression du câblé, et une tête de guidage (20) comportant une bielle (21) reliée aux extrémités desdits premiers arbres rotatifs par des biellettes (27, 28), lesdites biellettes étant elles mêmes montées sur la bielle (21) par l'intermédiaire de deuxièmes arbres (24, 25) d'axes parallèles aux premiers arbres, les deuxièmes arbres étant montés en rotation sur la bielle (21), les biellettes pouvant pivoter autour de leurs axes respectifs par rapport aux-dits premiers et deuxièmes arbres, et **en ce que** l'entraînement en rotation des premiers et deuxièmes arbres autorise un déplacement transversal alternatif de la bielle (21), l'amplitude du déplacement transversal étant proportionnelle à l'importance du pivotement des biellettes (27, 28) autour de leurs axes respectifs.

2. Appareil selon la revendication 1 dans lequel l'importance du pivotement des biellettes (27, 28) est déterminée directement par le rapport des vitesses et V2, ce rapport étant modifiable de façon continue pendant la pose du câblé.

3. Appareil selon la revendication 1, dans lequel la période des ondulations réalisées par le câblé est déterminée par la vitesse de rotation V3 des premiers arbres rotatifs (31, 32).

4. Appareil selon la revendication 1, dans lequel la bielle (21) porte deux galets de guidage (22, 23) du câblé montés libres en rotation sur cette dernière et portant respectivement une gorge de réception (221, 231) dudit câblé.

5. Appareil selon la revendication 1 dans lequel les moyens de pose (40) comprennent un galet de pose (41) porté par un bras (42) fixé par une articulation élastique (45) au corps (5), tournant librement autour de son axe de rotation, dont la surface de révolution extérieure (410) est située contre la surface de réception (2) de sorte que le câblé passe entre ladite surface de révolution et la surface de réception.

6. Appareil selon l'une quelconque des revendications 1 à 5, dans lequel le corps (5) porte un électro-aimant (38) exerçant une force de rappel sur la bielle (21) visant à compenser la force de gravité.

7. Appareil selon l'une quelconque des revendications 1 à 6, destiné à la fabrication de pneumatiques.

8. Procédé d'application d'au moins un câblé sur une surface de réception rotative, qui comprend les étapes suivantes :
- on délivre un câblé dans une direction sensiblement perpendiculaire à l'axe de rotation de la surface de réception,
- on déplace transversalement à ladite surface le câblé afin de créer des ondulations sur cette dernière et
- on pose le câblé sur cette surface de réception,
**caractérisé en ce que** le déplacement transversal alternatif du câblé est obtenu par un mouvement de rotation autour d'un axe perpendiculaire à la direction de progression du câblé dont l'amplitude est directement déterminée par la quantité de câblé délivrée par tour de la surface de réception.

## Claims

1. Device (1) for applying at least one cable onto a rotating receiving surface (2) revolving at a rotation speed V2, comprising means for feeding the cable (10), comprising at least one capstan (11) with a cable feeding speed of V1, means (20, 30) for the alternating transverse displacement of the cable relative to the receiving surface (2) and means (40) for positioning the cable on the said receiving surface,
**characterised in that**
the means (20, 30) for the alternating transverse displacement of the cable comprise two first motorised rotary spindles (31, 32) carried by a body (5), the axes of the said first spindles being perpendicular to the travel direction of the cable, and a guiding head (20) comprising a connecting arm (21) connected to the ends of the said first rotary spindles by levers (27, 28), the said levers being themselves mounted on the arm (21) via second spindles (24, 25) whose axes are parallel to the first spindles, the second spindles being mounted to rotate on the arm (21), the levers being able to pivot around their respective axes relative to the said first and second spindles, and **in that** the driving in rotation of the first and second spindles enables an alternating transverse displacement of the arm (21), the amplitude of this transverse displacement being proportional to the extent of the pivoting of the levers (27, 28) around their respective axes.

2. Device according to Claim 1, in which the extent of the pivoting of the levers (27, 28) is determined directly by the ratio between the speeds V1 and V2, this ratio being continuously modifiable during the positioning of the cable.

3. Device according to Claim 1, in which the period of the undulations undergone by the cable is determined by the rotation speed V3 of the first rotary spindles (31, 32).

4. Device according to Claim 1, in which the arm (21) has two cable guide rollers (22, 23) mounted to rotate freely on the latter, the said rollers having respective grooves (221, 231) to receive the said cable.

5. Device according to Claim 1, in which the positioning means (40) comprise a positioning roller (41) carried by an arm (42) fixed by an elastic articulation (45) to the body (5), which turns freely around its rotation axis, whose external revolution surface (410) is against the receiving surface (2) so that the cable passes between the said revolution surface and the receiving surface.

6. Device according to any of Claims 1 to 5, in which the body (5) has an electromagnet (38) which exerts a restoring force on the arm (21) intended to compensate the force of gravity.

7. Device according to any of Claims 1 to 6, intended for the manufacture of tyres.

8. Process for applying at least one cable onto a rotating receiving surface, which comprises the following stages:
- a cable is fed in a direction essentially perpendicular to the rotation axis of the receiving surface,
- the cable is displaced transversely to the said surface in order to produce undulations on the latter, and
- the cable is positioned on the said receiving surface,
**characterised in that**
the alternating transverse displacement of the cable is obtained by a rotation movement about an axis perpendicular to the cable travel direction whose amplitude is directly determined by the quantity of cable fed in per revolution of the receiving surface.

## Patentansprüche

1. Vorrichtung zum Aufbringen (1) mindestens eines Kords auf eine mit einer Geschwindigkeit V2 rotierende Aufnahmefläche (2), mit Mitteln (10) zum Ausgeben des Kords mit mindestens einer Windeinrichtung (11) mit einer Ausgabegeschwindigkeit V1 des Kords, mit Mitteln zum wechselweisen Querversatz (20, 30) des Kords in Bezug auf die Aufnahmefläche (2) und Mitteln zum Verlegen (40) des Kords auf der Aufnahmefläche, **dadurch gekennzeichnet, dass** die Mittel zum wechselweisen Querversatz (20, 30) des Kords zwei erste motorisierte rotierende Wellen (31, 32) umfassen, die von einem Körper (5) getragen werden, wobei die Achsen der ersten Wellen senkrecht zur Fortbewegungsrichtung des Kords sind, sowie einen Führungskopf (20) mit einer Stange (21), die mit den Enden der ersten rotierenden Wellen über Schwingarme (27, 28) verbunden ist, wobei die Schwingarme wiederum über zweite Wellen (24, 25), deren Achsen zu den ersten Wellen parallel sind, an der Stange (21) montiert sind, wobei die zweiten Wellen in Rotation an der Stange (21) montiert sind, wobei die Schwingarme um ihre jeweiligen Achsen in Bezug auf die ersten und zweiten Wellen verschwenken können, und **dadurch** dass der Drehantrieb der ersten und zweiten Wellen einen wechselweisen Querversatz der Stange (21) zulässt, wobei die Amplitude des Querversatzes proportional zum Grad des Verschwenkens der Schwingarme (27, 28) um ihre jeweiligen Achsen ist.

2. Vorrichtung nach Anspruch 1, bei der der Grad des Verschwenkens der Schwingarme (27, 28) direkt vom Verhältnis der Geschwindigkeiten V 1 und V2 bestimmt wird, wobei dieses Verhältnis während des Verlegens des Kords kontinuierlich veränderbar ist.

3. Vorrichtung nach Anspruch 1, bei der die Periode der vom Kord ausgeführten Welligkeiten von der Drehgeschwindigkeit V3 der ersten rotierenden Wellen (31, 32) bestimmt wird.

4. Vorrichtung nach Anspruch 1, bei dem die Stange (21) zwei Rollen (22, 23) zum Führen des Kords trägt, die rotationsbeweglich an der Stange montiert sind und jeweils einen Hals (221, 231) zur Aufnahme des Kords tragen.

5. Vorrichtung nach Anspruch 1, bei der die Mittel zum Verlegen (40) eine Verlegerolle (41) aufweisen, die von einem Arm (42) getragen wird, der durch ein elastisches Gelenk (45) am Körper (5) befestigt ist, wobei sich die Verlegerolle frei um ihre Drehachse dreht und ihre äußere Rotationsfläche (410) derart an der Aufnahmefläche (2) angeordnet ist, dass der Kord zwischen der Rotationsfläche und der Aufnahmefläche hindurchläuft.

6. Vorrichtung nach einem der Ansprüche 1 bis 5, bei der der Körper (5) einen Elektromagneten (38) trägt, der eine Rückholkraft auf die Stange (21) ausübt, um die Schwerkraft zu kompensieren.

7. Vorrichtung nach einem der Ansprüche 1 bis 6, die der Herstellung von Reifen dient.

8. Verfahren zum Aufbringen mindestens eines Kords auf eine rotierende Aufnahmefläche, das die folgenden Schritte aufweist:
- Ausgeben eines Kords in einer Richtung, die im Wesentlichen senkrecht zur Drehachse der Aufnahmefläche ist,
- Verschieben des Kords quer zur Fläche, um Welligkeiten auf dieser zu erzeugen, und
- Verlegen des Kords auf der Aufnahmefläche,
**dadurch gekennzeichnet, dass** der wechselweise Querversatz des Kords durch eine Drehbewegung um eine senkrecht zur Fortbewegungsrichtung des Kords verlaufende Achse erhalten wird, deren Amplitude direkt von der Menge an ausgegebenem Kord pro Umdrehung der Aufnahmefläche bestimmt wird.
